Europäisches Patentamt

European Patent Office

Office européen des brevets

(19)

(11) Veröffentlichungsnummer: **0 008 673**
**B1**

(12) **EUROPÄISCHE PATENTSCHRIFT**

(45) Veröffentlichungstag der Patentschrift: **16.02.83**

(21) Anmeldenummer: **79102734.5**

(22) Anmeldetag: **31.07.79**

(51) Int. Cl.³: **H 04 N 9/04,** H 04 N 9/11,
H 04 N 3/15, H 04 N 3/36

(54) Anordnung und Verfahren zur Farbbildabtastung.

(30) Priorität: **31.08.78 DE 2838098**

(43) Veröffentlichungstag der Anmeldung:
**19.03.80 Patentblatt 80/6**

(45) Bekanntmachung des Hinweises auf die Patenterteilung:
**16.02.83 Patentblatt 83/7**

(84) Benannte Vertragsstaaten:
**FR GB IT NL**

(56) Entgegenhaltungen:
**DE - B - 2 553 658**
**FR - A - 2 359 557**
**US - A - 3 952 328**

**IBM TECHNICAL DISCLOSURE BULLETIN, Band
20, Nr. 1, Juni 1977, Seiten 436—437 New
York, U.S.A. S. G. CHAMBERLAIN et al.:
"Silicon Solid-State Fet Color Scanner"
MICROELECTRONICS, Band 7, Nr. 2, Dezember
1975, Seiten 60—63 Luton T. SIMMS: "The
application of CCD's to document scanning"**

(73) Patentinhaber: **SIEMENS AKTIENGESELLSCHAFT
Berlin und München Wittelsbacherplatz 2
D-8000 München 2 (DE)**

(72) Erfinder: **Herbst, Heiner, Dr.
Am See 2
D-8013 Haar (DE)**

(56) Entgegenhaltungen:
**FKTG, Fernseh- und Kinotechnische
Gesellschaft e.V., Tagensban der 5.
Jahrestagung v. 19—23.9.77 Kiel, Vortrag 26,
S. 219—223 D. Poetsch, Neue Lösungswege bei
der Filmabtastung**

## Anordnung zur Farbbildabtastung

Die Erfindung bezieht sich auf eine Anordnung zur Abtastung eines Farbbildes nach dem Oberbegriff des Patentanspruchs 1.

Eine Anordnung dieser Art ist aus dem Tagungsband der 5. Jahrestagung der FKTG (Fernseh- und Kinotechnische Gesellschaft e.V.) vom 19. bis 23. September 1977 in Kiel, Vortrag 26, Seiten 219—223, insb. Bild 8, bekannt. Hierbei sind neben dem die erste Gruppe von Bildpunkten enthaltenden linearen CTD-Bildsensor noch zwei weitere lineare CTD-Bildsensoren vorgesehen. Eine Abbildungsoptik zerlegt das abzutastende Farbbild in ein rotes, grünes und blaues Teilbild, die derart auf die Bildsensoren abgebildet werden, daß jeder derselben auf dieselbe Bildzeile ausgerichtet ist.

In Bild 6 derselben Veröffentlichung sind CTD-Bildsensoren dargestellt, deren Bildpunkte jeweils in zwei Gruppen aufgeteilt sind. Dabei weist einer dieser Sensoren zwei kammartig verschachtelte, parallel zueinander liegende Reihen von Fotodioden auf, die über individuell zugeordnete, nacheinander ansteuerbare Transfergates auf zwei gruppenspezifische Ausleseleitungen entladen werden. Diese sind an einen gemeinsamen Sensorausgang geführt. Ein anderer Sensor weist zwei kammartig verschachtelte Gruppen von Bildpunkten auf, die in einer Reihe liegen. Die Bildpunkte der einen Gruppe sind dabei mit den Stufen einer ersten Auslese-CCD-Anordnung verbindbar, die Bildpunkte der anderen Gruppe mit einer zweiten Auslese-CCD-Anordnung. Beide Ausleseanordnungen sind mit einem gemeinsamen Videoausgang verbunden.

Zum Zwecke der Farbteilung wird in obiger Veröffentlichung auf Abbildungsoptiken hingewiesen, die eine spektrale Zerlegung der das Farbbild abtastenden Lichtstrahlen bewirken. Zusätzlich findet sich ein allgemeiner Hinweis auf Farbstreifenfilter, die einem linearen CCD-Bildsensor vorgeordnet sind. Eine Gruppenaufteilung der Bildpunkte in der oben erwähnten Art zum Zwecke einer Farbteilung ist allerdings nicht beschrieben.

Aus dem IBM Technical Disclosure Bulletin, Band 20, Nr. 1, Juni 1977, Seiten 436 und 437, ist ein für eine Farbbildabtastung verwendeter linearer CCD-Bildsensor bekannt, dessen in einer einzigen Reihe liegende Bildpunkte in drei ineinander verschachtelte Gruppen aufgeteilt sind. Dabei sind die Bildpunkte einerseits mit gruppenspezifischen Empfindlichkeitskurven aus unterschiedlichen Spektralbereichen versehen und andererseits mit einer von drei gruppenspezifischen Auslese-CCD-Anordnungen verbunden. Letztere weisen Ausgänge auf, an denen den Empfindlichkeitskurven entsprechende Farbsignale nach Gruppen getrennt abgreifbar sind.

Aus der FR—A—2 359 557 ist eine Anordnung zur Farbfilmabtastung bekannt, bei der jedes einzelne Bild des Farbfilms jeweils optisch in drei Teilbilder in den Grundfarben Grün, Rot und Blau zerlegt wird, von denen dann jedes mittels einer linearen Anordnung einer Vielzahl von optoelektronischen Wandlern zeilenweise abgetastet wird. Jede dieser linearen Anordnungen gibt dabei ein der jeweils abgetasteten Zeile des Bildes zugeordnetes Farbsignal ab, wobei die Farbsignale dann in einem Speicher gespeichert und sodann zeilenweise nach einer Fernsehnorm ausgelesen werden.

In dem Buch von H. Lang "Farbmetrik und Farbfernsehen", Verlag R. Oldenbourg, München 1978, Seiten 122 bis 124, insb. Bild 7.6, ist ein Lichtpunktabtaster für Farbdiapositive beschrieben, bei dem als Lichtquelle eine Braunsche Röhre mit einem ein Fernsehraster beschreibenden Leuchtpunkt vorgesehen ist. Die von diesem ausgehenden, auf jeweils einen Bildpunkt des Farbbildes fokussierten Lichtstrahlen durchdringen diesen, werden in drei Lichtbündel aufgeteilt, mittels Farbfilter nach unterschiedlichen Spektralbereichs-Empfindlichkeitskurven bewertet und rufen in Fotomultipliern Fotoströme hervor, die dann in sog. Farbwertsignale der Grundfarben Rot, Grün und Blau umgesetzt werden. Letztere steuern dann beispielsweise die Helligkeiten der Grundfarben einer Farbfernsehbildröhre. Eine solche Steuerung ist im Bild 5.2 auf Seite 89 des genannten Buches dargestellt. Wegen der geringen, den Fotomultipliern zur Verfügung gestellten Lichtmengen ist bei dieser Anordnung der Störabstand der Farbwertsignale klein.

Der Erfindung liegt die Aufgabe zugrunde, eine Anordnung der eingangs genannten Art anzugeben, die insbesondere im Hinblick auf eine gute Farbwiedergabe und Bildauflösung störungsfreier arbeitet als die bekannten Anordnungen. Das wird erfindungsgemäß durch eine Ausbildung nach dem kennzeichnenden Teil des Anspruchs 1 erreicht.

Der Vorteil der Anordnung nach der Erfindung liegt insb. darin, daß durch die Ausbildung des CTD-Bildsensors und durch die Farbfilter in der beanspruchten Aufteilung auf die einzelnen Spektralbereiche eine zahlenmäßige Zuordnung der Bildpunkte auf die Spektralbereiche erfolgt, nach der dem Spektralbereich, der den ganzen Bereich des sichtbaren Lichtes umfaßt, die Hälfte aller Bildpunkte zugeordnet ist, während den Spektralbereichen der Grundfarben Rot und Blau jeweils ein Viertel der Bildpunkte zugeteilt sind. Außerdem kann die Anordnung zur Farbbildabtastung einfach, raumsparend und betriebssicher aufgebaut werden. Sie zeichnet sich weiterhin durch eine große Lichtempfindlichkeit aus.

Die Ansprüche 2 bis 12 sind auf vorteilhafte Weiterbildungen der Erfindung gerichtet; während Anspruch 13 ein Verfahren zum Betrieb einer Anordnung nach Anspruch 3 betrifft.

Die Erfindung wird nachfolgend anhand der Zeichnung näher erläutert. Dabei zeigt:

Figur 1 ein erstes Ausführungsbeispiel der Erfindung in schematischer Darstellung,

Figur 2 einen in Figur 1 verwendbaren CTD-Bildsensor,

Figur 3 Spannungs-Zeit-Diagramme zur Erläuterung der Betriebsweise eines Bildsensors nach Figur 2,

Figur 4 eine andere Ausführungsform eines in Figur 1 verwendbaren CTD-Bildsensors in einer Detaildarstellung,

Figur 5 einen Querschnitt des Bildsensors nach Figur 4,

Figur 6 Spannungs-Zeit-Diagramme für den Bildsensor nach Figur 4 und

Figur 7 eine Weiterbildung der Bildsensoren nach den Figuren 2 und 4.

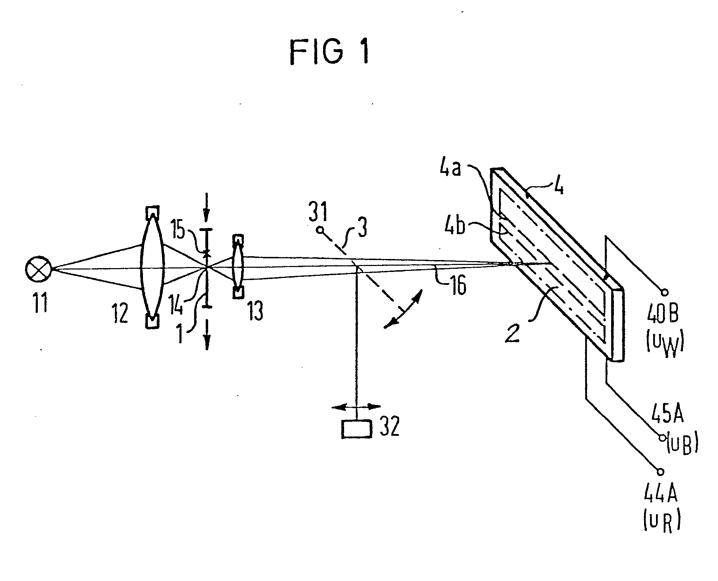

In Figur 1 ist eine Anordnung zur fotoelektrischen Abtastung eines transparenten Farbbildes 1 dargestellt, die eine ortsfeste Lichtquelle 11, eine erste Optik 12, eine zweite Optik 13 und einen Bildsensor 4 aufweist, der später im einzelnen beschrieben wird.

Der Bildsensor 4 befindet sich in einer Abbildungsebene, auf die eine fokussierte Abbildung des Farbbildes 1 mittels der Optiken 12 und 13 erfolgt. Auf der Vorderfläche des eine Langgestreckte Quaderform aufweisenden Bildsensors 4 ist eine mit 2 bezeichnete Farbfilterauflage vorgesehen, hinter welcher zwei mit den Bezugszeichen 4a und 4b versehene, dicht nebeneinanderliegende Reihen von Sensor-Bildpunkten angeordnet sind. Auf diese Bildpunktreihen werden zwei jeweils senkrecht zur Bildebene verlaufende Zeilen des Farbbildes 1 abgebildet, und zwar bei dem in Figur 1 dargestellten Strahlengang die durch den Bildpunkt 14 gehende Zeile auf die Bildpunktreihe 4a, während gleichzeitig die durch den Bildpunkt 15 gehende Zeile auf die Reihe 4b projiziert wird.

Die Farbfilterauflage 2 besteht im einzelnen aus einer Vielzahl von mosaikartig in zwei Reihen nebeneinander angeordneten Farbfiltern, die nach ihren spektralen Empfindlichkeitskurven in drei Typen einteilbar sind: Der erste Farbfiltertyp bewertet die von dem Farbbild 1 ausgehenden Lichtstrahlen 16 nach einer Empfindlichkeitskurve, die in einem Spektralbereich liegt, der etwa den ganzen Bereich des sichtbaren Lichtes umfaßt, wobei sie einen Bereich maximaler Empfindlichkeit im Spektralbereich der Grundfarbe Grün aufweist. Man bezeichnet einen solchen Filtertyp auch als W-Filter. Der zweite Filtertyp bewertet nach einer Empfindlichkeitskurve, die im Spektralbereich der Grundfarbe Rot liegt (R-Filter), während die Empfindlichkeitskurve des dritten Filtertyps im Spektralbereich der Grundfarbe Blau liegt (B-Filter). Anstelle des W-Filters kann auch ein sogenanntes G-Filter verwendet werden, dessen Empfindlichkeitskurve im Spektralbereich der Grundfarbe Grün liegt.

Bei dem dargestellten Ausführungsbeispiel sei zunächst angenommen, daß die Bildpunkte der Reihe 4a zu einer ersten Gruppe zusammengefäßt sind, während aus den Bildpunkten der Reihe 4b eine zweite und eine dritte Gruppe gebildet werden. Den Bildpunkten der ersten Gruppe sind dabei W-Filter vorgeordnet, den Bildpunkten der zweiten Gruppe jeweils R-Filter und denen der dritten Gruppe B-Filter. In diesem Fall werden von dem Bildsensor 4 an einem ersten Ausgang 40B Sensorsignale $u_W$ sequentiell ausgelesen, die den in den Bildpunkten der ersten Gruppe gespeicherten, von der durch 14 gehenden Zeile des Farbbildes 1 herrührenden und durch W-Filter bewerteten Bildinformationen entsprechen. Gleichzeitig werden an einem zweiten Ausgang 44A des Bildsensors 4 Sensorsignale $u_R$ ausgelesen, die den in der zweiten Gruppe von Bildpunkten gespeicherten, von der durch 15 verlaufenden Bildzeile herrührenden, durch R-Filter bewerteten Bildinformationen entsprechen. Über einen Ausgang 45A werden schließlich Sensorsignale $u_B$ ausgelesen, die den in der dritten Gruppe von Bildpunkten gespeicherten, von der durch 15 verlaufenden Bildzeile herrührenden, durch B-Filter bewerteten Bildinformationen entsprechen. Die $u_W$-, $u_R$- und $u_B$-Signale stellen dabei sogenannte Bewertungssignale dar, die den Empfindlichkeitskurven der verwendeten Farbfilter eindeutig zugeordnet sind. Aus ihnen können in an sich bekannter Weise drei Farbwertsignale abgeleitet werden, die dann die Helligkeiten der Grundfarben einer Farbfernsehbildröhre steuern. Je nach dem Verlauf der Empfindlichkeitskurven und nach der Breite der durch sie definierten Spektralbereiche findet eine spezielle Codierung der Bewertungssignale statt, um die Farbwertsignale zu erhalten.

Abweichend hiervon können anstelle der genannten W-Filter auch G-Filter den Bildpunkten der ersten Gruppe vorgeordnet werden, wobei die Filter der anderen Bildpunktgruppen unverändert bleiben. In diesem Fall werden bei 40B sogenannte $u_G$-Bewertungssignale ausgelesen. Zur Ableitung der drei Farbwertsignale werden dann die $u_G$-, $u_R$- und $u_B$-Signale codiert. Andererseits können die Farbfiltertypen in ihrer Zuordnung zu den drei Bildpunktgruppen beliebig gegeneinander ausgetauscht werden, wobei stets die aus der ersten Bildpunktgruppe abgeleiteten Sensorsignale am Ausgang 40B, die aus der zweiten Gruppe abgeleiteten am Ausgang 44A und die Sensorsignale der dritten Bildpunktgruppe am Ausgang 45A erscheinen.

Farbfilter-Empfindlichkeitskurven, die für das Ausführungsbeispiel nach Figur 1 verwendbar sind, können beispielsweise dem obengenannten Buch von H. Lang auf Seite 91, insbesondere Bild 5.4, entnommen werden.

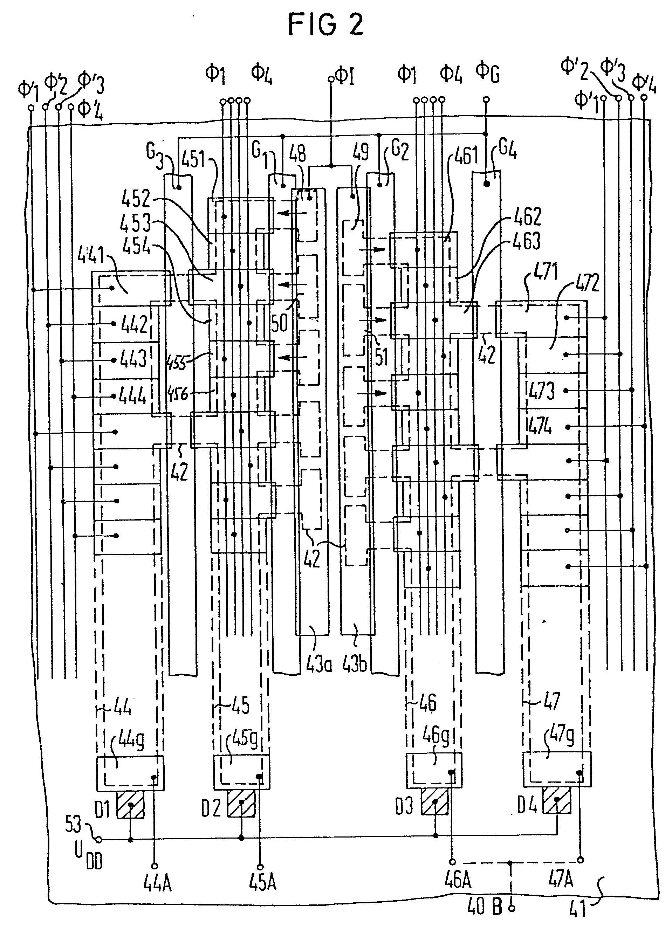

Zweckmäßigerweise sind die Bildpunkte der zweiten Reihe 4b so auf die zweite und dritte Bildpunktgruppe aufgeteilt, daß nebeneinanderliegende Bildpunkte jeweils unterschiedlichen Gruppen angehören. Dies ist im einzelnen der Fig. 2 zu entnehmen, die eine erste Ausführungsform des in Figur 1 schematisch dargestellten Bildsensors 4 als eine auf einem Halbleitersubstrat integrierte Schaltung in Draufsicht zeigt. Dabei ist das Halbleitersubstrat, das z.B. aus n-leitendem Silizium besteht, mit 41 bezeichnet. Eine die Substratoberfläche bedeckende, elektrisch isolierende Schicht, z.B. aus $SiO_2$, ist innerhalb der gestrichelten Linien 42 wesentlich dünner ausgebildet als außerhalb derselben. Man bezeichnet die dünneren Bereiche auch als Gateoxid, die dickeren als Feldoxidbereiche. Oberhalb der isolierenden Schicht befinden sich zwei Sensorgateelektroden 43a und 43b, die auf der einen Seite von Elektrodenreihen 44 und 45 und auf der anderen Seite von Elektrodenreihen 46 und 47 flankiert werden. Die Elektroden sind metallisch leitende Strukturen, die insbesondere aus Teilen einer ganzflächig aufgebrachten, elektrisch leitenden Beschichtung bestehen. Die Beschichtung ist beispielsweise aus polykristallinem, hochdotiertem Silizium gebildet oder besteht aus einer Metallschicht, z.B. aus Aluminium. Die Herstellung der Elektroden 43a und 43b und der Elektrodenreihen 44 bis 47 erfolgt in herkömmlicher Weise, z.B. mittels einer Reihe von fotolithografischen Schritten unter Anwendung von Masken, die die Umrisse der einzelnen Strukturen definieren.

Im einzelnen stellen die von den Sensorgateelektroden 43a und 43b bedeckten Orte des Halbleitersubstrats 41, die sich unterhalb von Dünnoxidbereichen befinden, einzelne Bildpunkte 48, 49, 50, 51 usw. des Bildsensors dar. Diese Bildpunkte sind nach der Erfindung in zwei zueinander parallelen Reihen angeordnet, wobei die Bildpunkte 49, 51 usw. in einer ersten Reihe liegen, die in Figur 1 mit 4a angedeutet ist, während die Bildpunkte 48, 50 usw. in einer zweiten Reihe angeordnet sind, die in Figur 1 das Bezugszeichen 4b trägt. Die Elektrodenreihen 44 bis 47 werden jeweils aus einzelnen dicht nebeneinanderliegenden Elektroden 441, 442, 443, 444...451, 452, 453, 454...gebildet. Dabei befindet sich die Elektrode 451 auf der Höhe des Bildpunkts 48, die Elektroden 452 und 461 auf der Höhe des Bildpunkts 49, die Elektroden 441, 453 and 462 auf der Höhe des Bildpunktes 50, die Elektroden 442, 454, 463 and 471 auf der Höhe des Bildpunkts 51 usw.. Zwischen den Elektrodenreihen 45 und 46 einerseits und den Sensorgateelektroden 43a und 43b andererseits sind jeweils Transfergate-Elektroden $G_1$, $G_2$ plaziert, die die ersteren geringfügig seitlich überlappen, jedoch von diesen durch eine Zwischenschicht elektrisch isoliert sind. Zwischen den Elektrodenreihen 44 und 45 und den Elektrodenreihen 46 und 47 befinden sich weitere Transfergate-Elektroden $G_3$ und $G_4$. Die Sensorgateelektroden 43a und 43b sind über einen Anschluß mit einer Impulsspannung $\emptyset_1$

beschaltet, die Transfer-gate-Elektroden $G_1$ bis $G_4$ über einen gemeinsamen Anschluß mit einer Impulsspannung $\emptyset_G$. Jede vierte Elektrode 451, 455 usw. von 45 ist über eine gemeinsame Leitung mit einer Impulsspannung $\emptyset_1$ beschaltet, jede vierte Elektrode 452, 456 usw. liegt an einer gemeinsamen Leitung, die eine Impulsspannung $\emptyset_2$ führt, jede vierte Elektrode 453 usw. an einer Leitung mit der Impulsspannung $\emptyset_3$ und jede vierte Elektrode 454 usw. an einer Leitung mit der Impulsspannung $\emptyset_4$. In analoger Weise werden die einzelnen Elektrode der Reihe 46 mit den Impulsspannungen $\emptyset_1$ bis $\emptyset_4$ beschaltet, während die Elektroden der Reihen 44 und 47 mit Impulsspannungen $\emptyset_1'$ bis $\emptyset_4'$ beschaltet sind.

Jede der Elektrodenreihen 44 bis 47 gehört zu einer Ladungsverschiebeanordnung, die durch die Impulsspannungen $\emptyset_1$ bis $\emptyset_4$ bzw. $\emptyset_1'$ bis $\emptyset_4'$ getaktet werden. Am unteren Ende jeder Elektrodenreihe sind Elektroden 44g bis 47g dargestellt, die von den Taktimpulsspannungen freigeschaltet sind, jedoch an Ausgänge 44A bis 47A geführt sind. Diesen Elektroden sind ausgangsseitige Diffusionsgebiete $D_1$ bis $D_4$ nachgeordnet, die über einem gemeinsamen Anschluß 53 an einer Drainspannung $U_{DD}$ liegen. Die Ausgänge 46A und 47A können mit einem gemeinsamen Ausgang 40B verbunden sein.

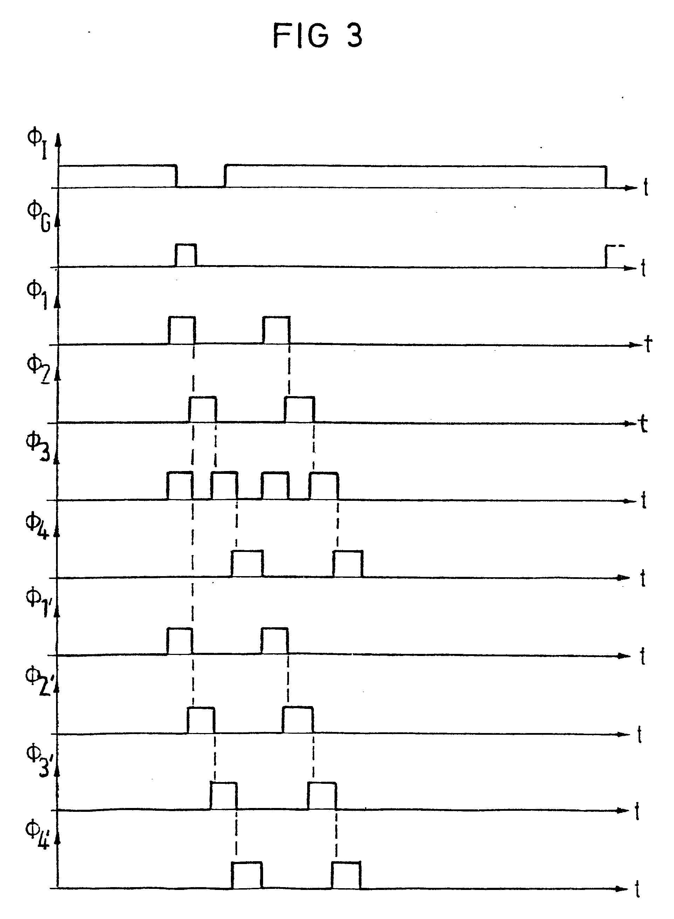

Im Betrieb wird zunächst ein Impuls $\emptyset_1$ angelegt, der die sogenannte Integrationszeit bestimmt. Innerhalb derselben sammeln sich in den Bildpunkten 48 bis 51 usw. unter dem Einfluß der Belichtung elektrische Ladungen an, die mit ihrer Größe der jeweiligen lokalen Beleuchtungsstärke entsprechen. Nach dem Ablauf der Integrationszeit sorgt ein Transfergateimpuls $\emptyset_G$ dafür, daß diese Ladungen in den eingezeichneten Pfeilrichtungen aus den Bildpunkten in den Bereich der Ladungsverschiebeanordnungen 44 bis 47 verschoben werden, und zwar die unter 48 entstandene Ladung unter die Elektrode 451, die unter 49 entstandene Ladung unter 461, die unter 50 entstandene Ladung unter 441 und die unter 51 entstandene Ladung unter 471. Durch die entsprechend Figur 3 zeitlich auftretenden Taktimpulsspannungen $\emptyset_1$ bis $\emptyset_4$ und $\emptyset_1'$ bis $\emptyset_4'$ werden die genannten Ladungen nach dem Durchlaufen der Ladungsverschiebeanordnungen schrittweise unter den Elektroden 44g bis 47g hindurchgeschoben und gelangen schließlich in die Diffusionsgebiete $D_1$ bis $D_4$. Die hierbei an den Elektroden 44g bis 47g auftretenden Potentialverschiebungen werden* übertragen und ergeben dort Auslesesignale, die aus nacheinander auftretenden, impulsförmigen Anteilen bestehen, die den Beleuchtungsstärken in den nacheinander ausgelesenen Bildpunkten während der Integrationszeit jeweils entsprechen.

*an die Ausgänge 44A bis 47A

Die durch den nächstfolgenden Impuls $\emptyset_1$ definierte Integrationszeit fällt zeitlich mit dem Verschieben der in der vorangegangenen Integrationszeit gebildeten Ladungen über die Ladungsverschiebeanordnungen 44 bis 47 zusammen.

Anstelle der dargestellten Ladungsverschiebeanordnungen 44 bis 47, die als SCCD-Anordnungen mit einem Ladungstransport unmittelbar unterhalb der Substratoberfläche oder als BCCD-Anordnungen mit einem Ladungstransport im Inneren des Substrats aufzufassen sind, können im Sinne der vorliegenden Erfindung auch an sich bekannte Eimerkettenschaltungen (BBD) verwendet werden. Beide Systeme von Ladungsverschiebeanordnungen sind in dem Buch von Sequin und Tompsett "Charge Transfer Devices", Academic Press, New York, 1975, auf den Seiten 1 bis 18 beschrieben.

Nach den Angaben zur Figur 1 wären in Figur 2 den Bildpunkten 49, 51 usw. W-Filter vorgeordnet, dem Bildpunkt 50 ein R-Filter und dem Bildpunkt 48 ein B-Filter. Die über die Anordnungen 46 und 47 verschobenen Ladungsmengen erzeugen Ausgangssignale, die an einem gemeinsamen Ausgang 40B beider Anordnungen einander überlagert werden und so das Bewertungssignal $u_W$ bilden. Die über die Anordnung 44 ausgelesenen Sensorsignale ergeben an dem Ausgang 44A das Bewertungssignal $u_R$, die über 45 ausgelesenen Sensorsignale das Bewertungssignal $u_B$ am Ausgang 45A.

Zum Abtasten der nächsten beiden Zeilen wird das Bild 1 in Figur 1 in Pfeilrichtung um zwei Zeilenabstände verschoben, insbesondere im Rahmen einer kontinuierlichen Vorschubbewegung. Damit verschiebt sich auch die auf die Ebene des Bildsensors 4 projizierte Abbildung des Farbbildes 1, so daß die Bildpunktreihen auf die nächsten beiden Zeilen ausgerichtet werden. Die Verschiebung kann auch mittels einer Vorrichtung vorgenommen werden, die eine Veilzahl von Farbbildern, die auf einem gemeinsamen Träger aufgebracht sind, in Pfeilrichtung transportiert. Insbesondere kann auf diese Weise eine Farbfilmabtastung erfolgen.

Eine andere Lösung zur Erzielung einer Vorschubbewegung besteht darin, daß ein Spiegel 3 im Strahlengang der Lichtstrahlen 16 angeordnet ist, der um eine ortsfeste Achse 31 drehbar gelagert ist. Die von ihm reflektierten Strahlen verschieben die auf die Ebene eines Bildsensors 32 projizierte Abbildung des Bildes 1 in Richtung der eingezeichneten Doppelpfeile.

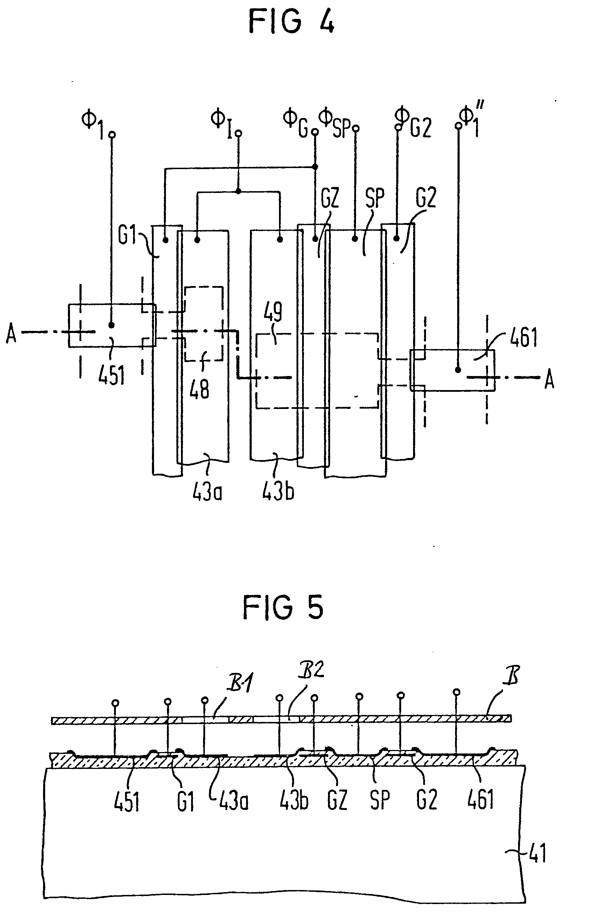

Figur 4 zeigt eine andere Ausführungsform des in Figur 1 verwendeten Bildsensors 4. Dieser entspricht der Figur 2 mit dem Unterschied, daß zwischen dem Sensorgate 43b und dem Transfergate G2 ein zusätzliches Transfergate GZ und eine streifenförmige Elektrode SP angeordnet sind. Seitlich neben den Transfergate-Elektroden G1 und G2 sind entsprechend Figur 2 die Elektroden 451 und 461 dargestellt, unter die die in den Bildpunkten 48 und 49 integrierten Ladungsträger verschoben werden. Das zusätzliche Transfergate GZ ist mit der Taktspannung $\emptyset_G$ beschaltet, die auch an G1 liegt, während SP mit einer weiteren Taktspannung $\emptyset_{SP}$ beaufschlagt ist. Das Transfergate G2 ist mit einer Taktspannung $\emptyset_{G2}$ beschaltet und die an der Elektrode 461 liegende Taktspannung ist mit $\emptyset_1''$ bezeichnet.

Figur 5 zeigt einen Querschnitt längs der Linie A—A durch die Anordnung nach Figur 4. Wie hieraus hervorgeht, ist oberhalb der leitenden Belegungen 451, G1, GZ, SP, G2 und 461 eine Blende B vorgesehen, die die entsprechenden Teile des Halbleitersubstrats 41 gegen einfallendes Licht abschirmt. Lediglich die Substratbereiche unterhalb der Sensorgate-Elektroden 43a und 43b, die die Bildpunkte darstellen, werden durch Öffnungen B1 und B2 beleuchtet.

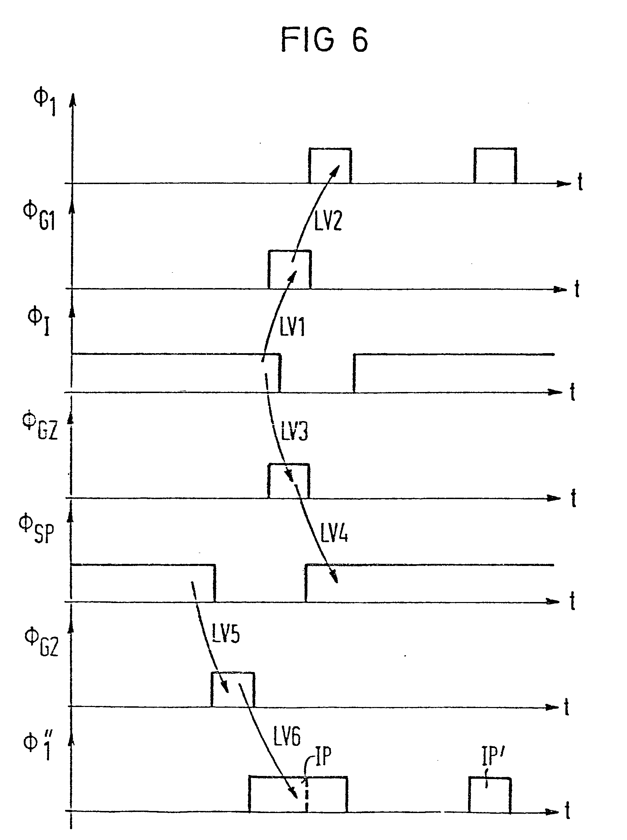

Aus den Spannungs-Zeit-Diagrammen der Figur 6 ist ersichtlich, daß am Ende einer Integrationszeit, d.h. am Ende des Impulses $\emptyset_I$, die Gateelektroden G1 und GZ mit Impulsen belegt werden. Daraus resultiert eine Ladungsverschiebung (LV1, LV2) aus dem Bildpunkt 48 unter die Elektrode 451 und eine Ladungsverschiebung (LV3, LV4) aus dem Bildpunkt 49 in den von der Elektrode SP zusammen mit dem unter ihr liegenden Teil des Halbleitersubstrats und der dazwischenliegenden Isolierschicht beim Anlegen der Spannung $\emptyset_{SP}$ gebildeten Isolierschichtkondensator. Kurz vor dem Auftreten von $\emptyset_{G1}$ bzw. $\emptyset_{GZ}$ wird mittels eines Impulses $\emptyset_{G2}$ das Transfergate zwischen dem Isolierschichtkondensator SP und der Elektrode 461 geöffnet, so daß die nach der vorhergehenden Integrationszeit in dem Speicherkondensator SP zwischengespeicherte Ladung unter die Elektrode 461 geschoben werden kann (LV5, LV6). Der Impuls IP der Taktspannung $\emptyset_1''$ ist gegenüber den anderen Impulsen IP' von $\emptyset_1''$ verlängert, um den Verschiebevorgang LV6 zu ermöglichen. Abgesehen von der Länge des Impulses IP beim Auslesen des Isolierschichtkondensators SP entspricht die Taktspannung $\emptyset_1''$ der Taktspannung $\emptyset_1$.

Nach obligem ergibt sich folgende Betriebsweise der Schaltung nach Figur 4: Die mit einem W-Filter bewerteten Bildinformationen aus dem Bildpunkt 49 werden nach der Integrationszeit in SP zwischengespeichert, während die mit einem B-Filter bewerteten Bildinformationen aus dem Bildpunkt 48 unmittelbar in die Anordnung 45 gelangen, wo sie ausgelesen werden. Parallel zu diesem Auslesevorgang läuft ein anderer Auslesevorgang über die Anordnung 46 ab, der die nach der vorhergehenden Integrationszeit in SP zwischengespeicherte Bildinformation aus dem Bildpunkt 49 betrifft. Wird der Zeilenvorschub des Farbbildes 1 so gewählt, daß innerhalb einer Integrationsperiode eine Verschiebung um einen Zeilenabstand erfolgt, so wird von ein und derselben Zeile zunächst eine W-Information zwischengespeichert und nach dem nächsten Integrationsvorgang dann die B-Information direkt ausgelesen, wobei parallel hierzu auch die Auslesung der zwischengespeicherten W-Information erfolgt. Da parallel zu der Auslesung der B-Information auch die R-Information ausgelesen wird, und zwar über eine eigene Ladungsverschiebeanordnung, die in Figur 4 nicht dargestellt ist, gelangen die zu ein und derselben Bildzeile gehörigen Bewertungssignale $u_W$, $u_B$ und $u_R$ praktisch gleichzeitig an die Ausgänge 44A bis 47A bzw. 44A, 45A und 40B (Figur 2), obwohl sie über auf benachbarte Zeilen ausgerichtete Bildpunkte abgeleitet werden. Hierdurch werden bei der Wiedergabe des Farbbildes 1 mittels der genannten Farbwertsignale, die die Helligkeiten der Grundfarben einer Farbfernsehbildröhre steuern, farbige Randstreifen an einzelnen Konturen vermieden.

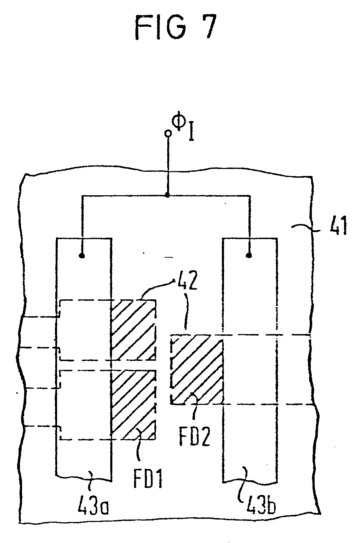

Figur 7 zeigt eine Weiterbildung der in den Figuren 2 und 4 dargestellten Bildsensoren, bei der zwischen den Elektroden 43a und 43b in Verlängerung der dort dargestellten Dünnoxidbereiche jeweils umdotierte Halbleiterbereiche FD1, FD2 usw. vorgesehen sind. Diese bilden Fotodioden, die die Empfindlichkeit der Bildsensoren weiter erhöhen. Die an die Fotodioden angrenzenden Teile des Halbleitersubstrats, die unterhalb von 43a und 43b liegen, stellen dabei MIS-Kondensatoren dar, in denen die von den Fotodioden erzeugten Ladungsträger gespeichert werden. Dabei werden alle Bereiche der Halbleiteroberfläche außerhalb der Fotodioden FD1, FD2 usw. gegen einfallendes Licht abgeschirmt.

Zur besseren Aufbereitung der aus den Ladungsverschiebeanordnungen 44 bis 47 ausgelesenen Bewertungssignale ist es zweckmäßig, den Ausgängen 44A bis 47A bzw. dem Ausgang 40B Abtast- und Haltestufen nachzuschalten, die einen ausgelesenen Signalwert solange speichern, bis er durch den nächstfolgenden ersetzt wird.

Die den Bildpunkten vorgeordneten Farbfilter können entweder auf transparenten Trägerplatten angeordnet sein, die dann an dem Bildsensor befestigt sind, oder aus Farbschichten bestehen, die direkt auf die Oberfläche des Bildsensors aufgebracht werden.

Zur Gewinnung der Bewertungssignale $u_R$ und $u_B$ genügt es vielen Fällen, die Anzahl der zugeordneten Bildpunkte kleiner zu wählen als die Anzahl der zur Ableitung des Signals $u_W$ erforderlichen Bildpunkte. Beispielsweise kann die Anzahl der zur Gewinnung der $u_R$- und $u_B$-Signale dienenden Bildpunkte jeweils ein Viertel der Anzahl der für das $u_W$-Signal vorgesehenen Bildpunkte betragen.

**Patentansprüche**

1. Anordnung zur Abtastung eines Farbbildes (1), bei der die Abtastung vornehmende Lichtstrahlen nach drei in unterschiedlichen Spektralbereichen liegenden Empfindlichkeitskurven bewertet werden, bei der ein linearer CTD-Bildsensor (4) vorgesehen ist, dessen auf eine Zeile des Farbbildes (1) ausgerichtete Bildpunkte (4a) zu einer ersten Gruppe zusammengefaßt sind, hinter einem ersten Farbfilter (21) mit einem ersten gruppenspezifischen Spektralbereich angeordnet sind und jeweils mit einer oder mehreren Ladungsverschiebeanordnungen verbindbar sind, welche einen Ausgang zum sequentiellen Auslesen sämtlicher Sensorsignale der ersten Gruppe aufweisen, bei der über zwei weitere Gruppen von Bildpunkten linearer CTD-Bildsensoren, denen weitere Farbfilter mit unterschiedlichen, gruppenspezifischen Spektralbereichen vorgeordnet sind, entsprechende Sensorsignale mittels einer oder mehrerer, gruppenspezifischer Ladungsverschiebeanordnungen sequentiell und nach beiden Gruppen getrennt ausgelesen werden, bei der aus den Sensorsignalen der drei Gruppen den drei Spektralbereichen zugeordnete Bewertungssignale ($u_W$, $u_B$, $u_R$) erzeugt werden und bei der eine Vorrichtung zum Verschieben des auf die Sensorebene projizierten Farbbildes vorhanden ist, dadurch gekennzeichnet, daß der lineare CTD-Bildsensor (4) eine parallel neben den Bildpunkten der ersten Gruppe (4a) engeordnete Reihe von Bildpunkten (4b) aufweist, die zu den beiden weiteren Gruppen zusammengefaßt sind, wobei die Bildpunkte der beiden weiteren Gruppen ineinander verschachtelt sind, daß der erste gruppenspezifische Spektralbereich etwa den ganzen Bereich des sichtbaren Lichtes umfaßt und einen Teilbereich maximaler Empfindlichkeit im Spektralbereich der Grundfarbe Grün aufweist, daß den Bildpunkten der ersten weiteren Gruppe vorgeordnete weitere Farbfilter einen Spektralbereich aufweisen, der der Grundfarbe Rot entspricht und daß den Bildpunkten der zweiten weiteren Gruppe vorgeordnete weitere Farbfilter einen Spektralbereich aufweisen, der der Grundfarbe Blau entspricht.

2. Anordnung nach Anspruch 1, dadurch gekennzeichnet, daß die Bildpunkte der ersten Gruppe (4a) jeweils mit einer von zwei Ladungsanordnungen (46, 47) verbindbar sind, die einen gemeinsamen Ausgang (40B) aufweisen, wobei die Bildpunkte der ersten weiteren Gruppe (4b) lediglich mit einer ersten weiteren Ladungsverschiebeanordnung (44) und die Bildpunkte (50) der zweiten weiteren Gruppe (4b) lediglich mit einer zweiten weiteren Ladungsverschiebeanordnung (45) verbindbar sind.

3. Anordnung nach Anspruch 1 oder 2, dadurch gekennzeichnet, daß zwischen einem Sensorgate (43b), das oberhalb der in einem dotierten Halbleitersubstrat (41) enthalten Bildpunkte (49) der ersten Gruppe oder der beiden weiteren Gruppen angeordnet und durch eine dünne Isolierschicht von dem Substrat (41) getrennt ist, und einem seitlich neben der nächstliegenden Ladungsverschiebeanordnung (46) isoliert angeordneten Transfergate (G2) ein dem Sensorgate (43b) benachbartes, zusätzliches Transfergate (Gz) und neben diesem eine dem Transfergate (G2) benachbarte, streifenförmige Elektrode (SP) isoliert angeordnet sind und daß die Elektrode (SP) mit den unter ihr liegenden, auf der Höhe der einzelnen Bildpunkte (49) befindlichen Halbleiterteilbereichen und der diese Teilbereiche abdeckenden Isolierschicht jeweils Isolierschichtkondensatoren bildet.

4. Anordnung nach einem der vorhergehenden Ansprüche, dadurch gekennzeichnet, daß die Ausgänge (44A bis 47A, 40B) der Ladungsverschiebeanordnungen mit Abtast- und Haltestufen beschaltet sind.

5. Anordnung nach einem der vorhergehenden Ansprüche, dadurch gekennzeichnet, daß die Vorrichtung zum Verschieben des projizierten Farbbildes aus einer das Farbbild (1) quer zur Zeilenrichtung verschiebenden Transportvorrichtung besteht.

6. Anordnung nach Anspruch 5, dadurch gekennzeichnet, daß die Transportvorrichtung zum Transport einer Vielzahl von auf einem gemeinsamen Träger aufgebrachten Farbbildern (1) ausgebildet ist.

7. Anordnung nach einem der Ansprüche 1 bis 4, dadurch gekennzeichnet, daß die Vorrichtung zum Verschieben des projizierten Farbbildes aus einem im Strahlengang der abtastenden Lichtstrahlen (16) angeordneten, um eine ortsfeste Achse (31) drehbar gelagerten Spiegel (3) besteht.

8. Anordnung nach einem der Ansprüche 1— 3, dadurch gekennzeichnet, daß die Bildpunkte (48 bis 51) des Bildsensors als Fotodioden (FD1, FD2) mit einem in einem dotierten Halbleitersubstrat (41) angeordneten, entgegengesetzt dotierten Gebiet und einer das Halbleitersubstrat (41) abdeckenden Isolierschicht ausgebildet sind.

9. Anordnung nach einem der Ansprüche 1 bis 3, dadurch gekennzeichnet, daß die Bildpunkte (48 bis 51) des Bildsensors als MIS-Speicherkondensatoren ausgebildet sind.

10. Anordnung nach Anspruch 8, dadurch gekennzeichnet, daß die Bildpunkte (48 bis 51) des Bildsensors jeweils aus einer Fotodiode (FD1, FD2) und einem benachbarten MIS-Speicherkondensator bestehen.

11. Anordnung nach Anspruch 1, dadurch gekennzeichnet, daß die Farbfilter auf transparenten Trägerplatten angeordnet sind, die auf dem Bildsensor befestigt sind.

12. Anordnung nach Anspruch 1, dadurch gekennzeichnet, daß die Farbfilter aus direkt auf die Oberfläche des Bildsensors aufgebrachten Farbschichten bestehen.

13. Verfahren zum Betrieb der Anordnung nach Anspruch 3, dadurch gekennzeichnet, daß nach dem Ausrichten der ersten Gruppe von Bildpunkten des Bildsensors auf eine erste und der beiden weiteren Gruppen auf eine zweite Zeile des Farbbildes die über die erste Gruppe gewonnenen Bildinformationen zunächst in einer dieser Gruppe zugeordneten Reihe von Isolierschichtkondensatoren zwischen-gespeichert werden, daß anschließend eine Verschiebung des projizierten Farbbildes in eine solche Lage erfolgt, daß die beiden weiteren Gruppen von Bildpunkten auf die in die Isolierschichtkondensatoren ausgelesene Zeile ausgerichtet werden, und daß schließlich eine Auslesung der Isolierschichtkondensatoren in die der ersten Gruppe zugeordneten Ladungsverschiebeanordnungen und eine Auslesung der beiden weiteren Gruppen in die ihnen zugeordneten Ladungsverschiebeanordnungen erfolgt.

## Revendications

1. Dispositif pour analyser une image en couleurs (1), dans lequel les rayons lumineux effectuant l'analyse sont évalués suivant trois courbes de sensibilité se trouvant dans des plages spectrales différentes, dans lequel est prévu un détecteur d'image linéaire à transfert de charge (4), dont les éléments d'image (4a) dirigés vers une ligne de l'image en couleurs (1) sont réunis en un premier groupe, sont disposés derrière un premier filtre chromatique (21) possédant une première plage spectrale spécifique au groupe, et peuvent être reliés respectivement à un ou plusieurs dispositifs de transfert de charge, qui comportent une sortie pour la lecture séquentielle de tous les signaux du détecteur du premier groupe, dans lequel par intermédiaire de deux autres groupes d'éléments d'image de détecteurs d'image linéaires à transfert de charge, devant lesquels sont disposés d'autres filtres chromatiques possédant des plages spectrales différentes spécifiques aux groupes, des signaux de détecteurs correspondants sont lus séquentiellement et de façon distincte suivant les deux groupes, au moyen d'un ou plusieurs dispositifs de transfert de charge spécifiques aux groupes, dans lequel à partir des signaux de détecteurs des trois groupes sont produits des signaux d'évaluation ($u_W$, $u_B$, $u_R$) associés aux trois plages spectrales, et dans lequel est prévu un dispositif pour déplacer l'image en couleurs projetée sur le plan du détecteur, caractérisé par le fait que le détecteur d'image linéaire à transfert de charge (4) comporte une rangée, disposée parallèlement à côté des éléments d'image du premier groupe (4a), d'éléments d'image (4b) qui sont réunis pour former les deux autres groupes, les éléments d'image des deux autres groupes, étant imbriqués les uns dans les autres, que le plage spectrale spécifique au premier groupe comprend sensiblement toute la plage de la lumière visible et comprend une plage partielle de sensibilité maximale dans la plage spectrale de la couleur de base vert, que d'autres filtres chromatiques disposés devant les éléments d'image du premier autre groupe possèdent une plage spectrale qui correspond à la couleur de base rouge, et que d'autres filtres chromatiques disposés devant les éléments d'image du second autre groupe possèdent une plage spectrale qui correspond à la couleur de base bleue.

2. Dispositif suivant la revendication 1, caractérisé par le fait que les éléments d'image du premier groupe (4a) peuvent être reliés respectivement à un de deux dispositifs de transfert de charge (46, 47) qui possède une sortie commune (40B), les éléments d'image du premier autre groupe (4b) pouvant être reliés uniquement à un premier autre dispositif de transfert de charge (44), et les éléments d'image (50), du second autre groupe (4b) pouvant être reliés uniquement à un second autre dispositif de transfert de charge (45).

3. Dispositif suivant la revendication 1 ou 2, caractérisé par le fait qu'entre une porte de détecteurs (43b), qui est disposée au-dessus des éléments d'image (49), contenue dans un substrat semi-conducteur dopé (41), du premier groupe ou des deux autres groupes et qui est séparé du substrat (41) par une mince couche isolante, et une porte de transfert (G2) disposée de façon isolée latéralement à côté du dispositif de transfert de charge le plus proche (46), sont disposées de façon isolée une porte de transfert supplémentaire (GZ) voisine de la porte de détecteurs (43b) et, à côté de celle-ci, une électrode en forme de bande (SP) voisine de la porte de transfert (G2), et que l'électrode (SP) forme respectivement des condensateurs à couche isolante avec les zones partielles de semiconducteurs se trouvant sous elle, à la hauteur des éléments d'image individuels (49), et la couche isolante recouvrant ces zones partielles.

4. Dispositifs suivant l'une des revendications précédentes, caractérisé par le fait que les sorties (44A à 47A, 40B) des dispositifs de transfert de charge sont reliés à des étages de lecture et de maintien.

5. Dispositif suivant l'une des revendications précédentes, caractérisé par le fait que le dispositif pour déplacer l'image en couleurs projetée est constitué par un dispositif de transport déplaçant l'image couleurs (1) transversalement par rapport à la direction des lignes.

6. Dispositif suivant la revendication 5, caractérisé par le fait que le dispositif de transport est agencé pour le transport d'un certain nombre d'images en couleurs (1) disposées sur un support commun.

7. Dispositif suivant l'une des revendications 1 à 4, caractérisé par le fait que le dispositif pour déplacer l'image en couleurs projetée est constitué par un miroir (3) monté de façon à pouvoir tourner autour d'un axe fixe (31), disposé dans le trajet des faisceaux lumineux d'analyse (16).

8. Dispositif suivant l'une des revendications 1 à 3, caractérisé par le fait que les éléments d'image (48 à 51) du détecteur d'image se présentent sous la forme de photodiodes (FD1, FD2) comportant une zone disposée dans un substrat semiconducteur dopé (41) et dopée de façon opposée et une couche isolante recouvrant le substrat semiconducteur (41).

9. Dispositif suivant l'une des revendications 1 à 3, caractérisé par le fait que les éléments d'image (48 à 51) du détecteur d'image se présentent sous la forme de condensateurs d'accumulation MIS.

10. Dispositif suivant la revendication 8, caractérisé par le fait que les éléments d'image (48 à 51) du détecteur d'image sont respectivement constitués par une photodiode (FD1, FD2) et un condensateur d'accumulation MIS voisin.

11. Dispositif suivant la revendication 1, caractérisé par le fait que les filtres chromatiques sont disposés sur des plaques-supports transparentes qui sont fixées sur le détecteur d'image.

12. Dispositif suivant la revendication 1, caractérisé par le fait que les filtres chromatiques sont constitués par des couches colorées disposées directement sur la surface du détecteur d'image.

13. Procédé pour la mise en oeuvre du dispositif suivant la revendication 3, caractérisé par le fait qu'après avoir dirigé le premier groupe d'éléments d'image du détecteur d'image vers une première ligne de l'image en couleurs, et les deux autres groupes vers une seconde ligne, les informations d'image obtenues par l'intermédiaire du premier groupe sont tout d'abord mémorisées temporairement dans une rangée de condensateurs à couche isolante associée à ce groupe, qu'ensuite l'image en couleurs projetée est déplacée dans une position telle que les deux autres groupes d'éléments d'image soient dirigés vers la ligne lue dans les condensateurs à couche isolante, et qu'enfin les condensateurs à couche isolante sont lus dans les dispositifs de transfert de charge associés au premier groupe et les deux autres groupes sont lus dans les dispositifs de transfert de charge qui leur sont associés.

**Claims**

1. An arrangement for scanning a coloured image (1) where light beams which effect the scanning are evaluated in accordance with three sensitivity curves located in differential spectral zones, wherein a linear CTD-image sensor (4) is provided whose image points (4a), which are aligned with one row of the colour image (1), are combined to form a first group arranged behind a first colour filter (21) with a first group-specific spectral zone, and can each be connected to one or more than one charge transfer device (CTD) having an output for the sequential read-out of all the central signals of the first group, wherein via two further groups of image points of linear CTD image sensors preceded by further colour filters featuring different group-specific spectral zones, corresponding sensor signals can be read out sequentially and separately in accordance with the two groups by means of one or more group-specific CTD, wherein evaluation signals ($u_W$, $u_B$, $u_R$) assigned to the three spectral zones are produced from the sensor signals of the three groups, and wherein a device is provided which serves to shift the coloured image projected onto the sensor plane, characterised in that the linear CTD image sensor (4) comprises a row of image points (4b) arranged parallel next to the image points of the first group (4a), which image points are combined to form the two further groups, the image points of the two further groups are interposed, the first group-specific zone comprises more or less the entire range of the visible light and a sub-zone of maximum sensitivity in the spectral zone of the primary colour green, further colour filters which precede the image points of the first further group possess a spectral zone which corresponds to the primary colour red, and further colour filters which precede the image points of the second further group possess a spectral zone which corresponds to the primary colour blue.

2. An arrangement as claimed in Claim 1, characterised in that the image points of the first group (4a) can each be connected to one of two charge devices (46, 47) which possess a common output (40B), where the image points of the first further group (4b) can be connected only to a first further CTD (44) and the image points (50) of the second further group (4b) can be connected only to a second further CTD (45).

3. An arrangement as claimed in Claim 1 or 2, characterised in that between a sensor gate (43b) arranged above the image points (49) of the first group or of the two further groups contained in a doped semiconductor substrate (41), and which is separated from the substrate (41) by a thin insulating layer on the one hand and a transfer gate (G2) arranged in insulated fashion beside the next CTD (46) on the other hand, there is arranged an additional transfer gate (Gz) adjacent to the sensor gate (43b), and beside this there is arranged in insulated fashion a strip-like electrode (SP) adjacent to the transfer gate (G2), each electrode (SP) forming insulating layer capacitors with the semiconductor sub-zones arranged beneath it, and are themselves located at the level of the individual image points (49), and with the insulating layer which covers these sub-zones.

4. An arrangement as claimed in one of the preceding Claims, characterised in that the outputs (44A to 47A, 40B) of the charge transfer devices are connected to scanning and holding stages.

5. An arrangement as claimed in one of the preceding claims, characterised in that the device which serves to shift the projected colour image consists of a transport device which moves the coloured image (1) transversely to the direction of the rows.

6. An arrangement as claimed in Claim 5, characterised in that the transport device serves to transport a plurality of colour images (1) arranged on a common carrier.

7. An arrangement as claimed in one of the Claims 1 to 4, characterised in that the device which serves to shift the projected colour image consists of a reflector (3) arranged in the beam path of the scanning light beams (16) and mounted so as to be rotatable about a stationary axis (31).

8. An arrangement as claimed in one of the Claims 1 to 3, characterised in that the image points (48, 51) of the image sensor consist of photo-diodes (FD1, FD2) which possess a zone arranged in a doped semiconductor substrate (41) and doped oppositely thereto, and an insulating layer which covers the semiconductor substrate (41).

9. An arrangement as claimed in one of the Claims 1 to 3, characterised in that the image points (48, 51) of the image sensor consists of MIS storage capacitors.

10. An arrangement as claimed in Claim 8, characterised in that image points (48, 51) of the image sensor each consist of a photo-diode (FD1, FD2) and an adjacent MIS storage capacitor.

11. An arrangement as claimed in Claim 1, characterised in that the colour filters are arranged on transparent carrier plates which are attached to the image sensor.

12. An arrangement as claimed in Claim 1, · characterised in that the colour filters consist of colour layers applied directly to the surface of the image sensor.

13. A method of operating an arrangement as claimed in Claim 3, characterised in that following the alignment of the first group of image points of the image sensor to a first row of the colour image, and following the alignment of the two further groups to a second row of the colour image, the items of image information which have been obtained via the first group are initially intermediately stored in a row of insulating layer capacitors assigned to this group, that subsequently the projected colour image is shifted into a position in which the two further groups of image points are aligned to the row which has been read out into the insulating layer capacitors, and that finally the insulating layer capacitors are read out into the charge transfer devices assigned to the first group, and the two further groups are read out into the charge transfer devices assigned thereto.

# FIG 1

# FIG 2

FIG 3

# FIG 4

# FIG 5

FIG 6

# FIG 7